# EUROPÄISCHE PATENTSCHRIFT

(11) **EP 0 407 743 B1**
(45) Veröffentlichungstag und Bekanntmachung des Hinweises auf die Patenterteilung: **02.06.1993**
(21) Anmeldenummer: 90111067.6
(22) Anmeldetag: 12.06.1990
(51) Int. Cl.: F16K 31/68, F16K 31/64, G05D 23/02

(54) **Thermoelektrisches Mehrfachventil**
Thermoelectric multiple valve
Soupape multiple thermoélectrique

(30) Priorität: 13.07.1989 DE 8908557 U
(43) Veröffentlichungstag der Anmeldung: 16.01.1991
(73) Patentinhaber: BOSCH-SIEMENS HAUSGERÄTE GmbH, 81669 München (DE)
(72) Erfinder: Jerg, Helmut, Dipl.-Ing., D-7928 Giengen (DE); Deiss, Ulrich, Dipl.-Ing. (FH), D-7927 Sontheim (DE); Fetzer, Gerhard, Dipl.-Ing. (FH), D-8883 Gundelfingen (DE)

(56) Entgegenhaltungen:
- DE-A- 3 118 904
- DE-A- 3 224 731
- DE-A- 3 302 315
- DE-A- 3 703 092
- GB-A- 2 188 705
- US-A- 3 841 551

## Beschreibung

Die Neuerung betrifft ein thermoelektrisches Mehrfachventil.

Aus der DE-A-33 02 315 ist ein thermoelektrisches Mehrfachventil bekannt. Es handelt sich dabei um ein insbesondere für Waschmaschinen und/oder Kühlaggregate dienendes Ventil, das eine Ventilkammer aufweist, die mit einem Zufluß und mit mehreren Auslaßöffnungen versehen ist. In der Ventilkammer ist ein Ventilstößel mit Ventilkörper angeordnet, dessen Öffnungs- und Schließbewegungen von einem zugeordneten Aktuator gesteuert wird. Aktuatoren sind Antriebsmittel, bei denen durch einen elektrisch gespeisten Thermistor eine Wachsmasse erwärmt wird und durch die dabei erfolgte Volumensvergrößerung ein Kolben verstellt wird. Statt Wachs kann auch eine Mischung von geeigneten Stoffen Verwendung finden, deren Wärmeausdehnungskoeffizient einer vorbestimmten Temperatur entspricht. Bei diesem bekannten Mehrfachventil liegen die Auslaßöffnungen einander genau gegenüber. Dazwischen befindet sich der Ventilkörper. Auf diese Weise ist es möglich, abwechselnd die eine oder die andere Auslaßöffnung zu schließen oder bei Mittellage des Ventilkörpers beide Auslässe gleichzeitig zu versorgen. Das setzt allerdings voraus, daß das Wachs im Aktuator auf einer solchen Temperatur gehalten wird, bei der auf den Kolben, der einen aus dem Aktuator herausragenden Aktuatorkopf aufweist, ein relativ mäßiger Druck ausgeübt wird, der nicht genügt, um eine vorgeschaltete Feder vollständig zusammenzudrücken.

Bei dieser Anordnung können nicht beide Auslaßöffnungen gleichzeitig geschlossen werden, so daß im Zufluß noch ein weiteres Mehrfachventil für die Erfüllung dieser Funktion angeordnet werden müßte. Außerdem muß der Aktuator mit zwei Temperaturen steuerbar sein, um zwei Betriebsstellungen des Ventilkörpers zu ermöglichen. Damit bei dieser Konstruktion aber beide Auslaßöffnungen gleichzeitig offengehalten werden können, ist es unbedingt Voraussetzung, daß die Auslaßöffnungen einander gegenüberliegen.

Der Neuerung liegt die Aufgabe zugrunde, eine einfachere und leichtere Steuerung eines thermoelektrischen Mehrfachventils zu konzipieren, bei der mehrere Auslaßöffnungen einer Ventilkammer gleichzeitig oder abwechselnd zu öffnen bzw. auch ohne weitere Schaltmittel gleichzeitig zu schließen sind Außerdem soll es auch möglich sein, die Auslaßöffnungen nebeneinander anzuordnen.

Diese Aufgabe wird mit den Maßnahmen des Anspruchs 1 gelöst. Jeder Aktuator wirkt bei der Neuerung auf einen, einer Auslaßöffnung zugeordneten Ventilstößel.

Auf diese Weise wird ein thermoelektrisches Mehrfachventil zum vollständig getrennten gleichzeitigen oder abwechselnden Schalten von mehreren Auslaßöffnungen erreicht. Im Gegensatz zum Stand der Technik ermöglicht diese Lösung auch ein gleichzeitiges Schließen mehrerer Auslässe.

Nach einer vorteilhaften Ausbildung der Neuerung sind zur Erzielung einer einfachen Montage die Aktuatoren über eine Rastverbindung mit dem Deckel der Ventilkammer verbunden.

Eine weitere vorteilhafte Ausgestaltung der Neuerung ist dadurch gekennzeichnet, daß eine Membran vorgesehen ist, in die Aktuatorköpfe, die Ventilstößel und der Deckel eingeknöpft ist. Mit dieser Lösung wird eine komplizierte Befestigung eingespart und auf einfache Weise ein vormontierfähiges Bauteil erzielt. Weiterhin wird eine vollständig geschlossene Dichtung geschaffen, wobei keine Durchführung bewegter Teile durch eine Dichtungsanordnung notwendig wird, so daß keine zusätzlichen Dichtkräfte zum Bewegen der angetriebenen Teile überwunden werden müssen. Dies führt dazu, daß Aktuatoren mit geringer Schließkraft verwendet werden können.

Zweckmäßigerweise sind die Aktuatorköpfe auf der der Einknöpfstelle der Ventilstößel gegenüberliegenden Seite der Membrane eingeknöpft. Damit ist ein direkte Kraftübertragung vom Aktuator zum Ventilstößel gewährleistet.

Vorteilhafterweise sind die in die Membran eingeknöpften Ventilstößel über drei oder mehrere sternförmig angeordnete Gehäuserippen geführt. Das macht eine Justierung der Ventilstößel bei der Montage überflüssig. Ferner wird eine sichere Führung des Ventilstößels erzielt und dem Wasserdurchfluß ein möglichst geringer Strömungswiderstand entgegengesetzt.

Nach einer weiteren vorteilhaften Ausgestaltung der Neuerung ist die Membrane in dem Bereich, in dem die Ventilstößel und die Aktuatorköpfe eingeknöpft sind, als integrierte Feder ausgebildet. Über die Feder wird eine gewisse Wegreserve abgebaut. Außerdem gleicht dieser zusätzliche Weg Fertigungstoleranzen aus und erfordert keine Justierung des Antriebhubes.

Um eine leichte Montage zu erzielen, wird gemäß einer vorteilhaften Weiterbildung der Neuerung das Gehäuse der Ventilkammer mit dem Deckel, der mit der Membran verknüpft ist, in einen Gummischuh der Membran verrastet. Abgesehen davon, daß so eine gute Abdichtung erreicht wird, werden zusätzliche Befestigungselemente eingespart.

Um bei der Montage Zeitaufwand und Bauteile einzusparen, ist nach einer vorteilhaften Ausbildung der Neuerung das Mehrfachventil als komplette Montageeinheit vormontierbar und mit der Trägereinheit, z.B. dem Pumpentopf einer Haushalt-Geschirrspülmaschine, über Schnappverbindungen verbunden.

Damit der Strömungsdruck des Mediums keinen Einfluß auf die Bedienkräfte des Ventilstößels nehmen kann, sind gemäß einer Weiterbildung der Neuerung die Ventilstößel in Strömungsrichtung kegelig geformt. Diese Kegel bilden den Ventilkörper.

Abgesehen von einfacher Konstruktion und Montage zeichnet sich die Lösung nach der Neuerung vor allem dadurch aus, daß die Auslaßöffnungen abwechselnd getrennt geöffnet oder geschlossen werden können und daß sie ferner gleichzeitig geöffnet und geschlossen gehalten sein können. Ferner ist die Anzahl der verwendeten Bauteile sehr gering und auch die Ausfallrate des thermoelektrischen Mehrfachventils dementsprechend klein. Die Hauptwahrscheinlichkeit einer Störung geht von den Antriebseinheiten aus. Um bei einem Defekt trotzdem Mediumdurchsatz zu gewährleisten, ist die Auslegung der Antriebseinheiten so, daß bei ungeschaltetem Zustand die Sperrstelle geöffnet ist.

Die Neuerung wird nachstehend anhand des in der Zeichnung dargestellten Ausführungsbeispieles der Verwendung des neuerungsgemäßen thermoelektrischen Mehrfachventils mit 2 Auslaßöffnungen bei einer Haushalt-Geschirrspülmaschine näher erläutert. Es zeigen:

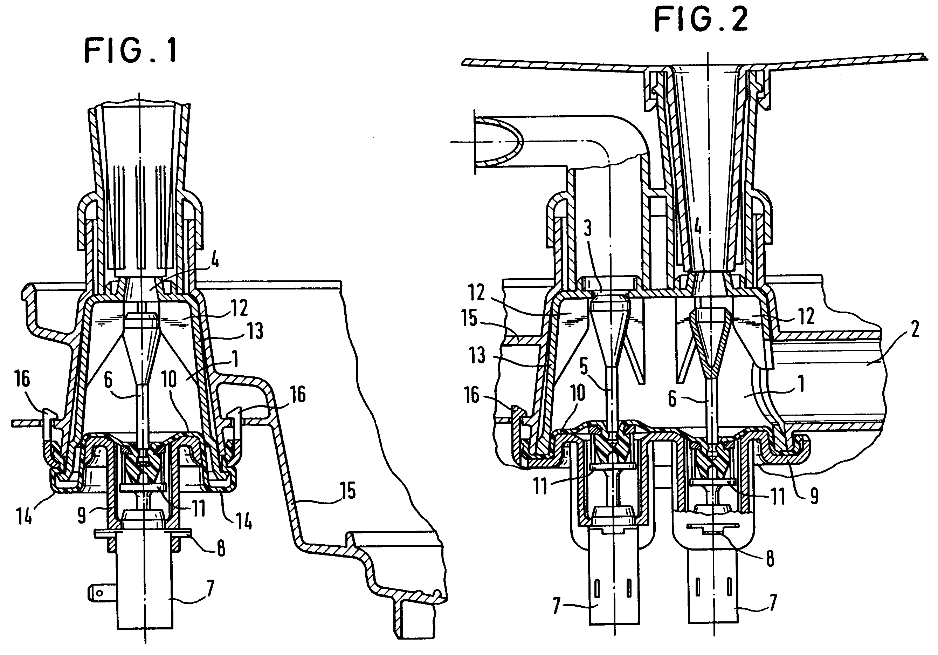

- Fig. 1: eine Seitenansicht eines Ausschnitts eines Pumpentopfes einer Haushalt-Geschirrspülmaschine mit Mehrfachventil und
- Fig. 2: die entsprechende Darstellung in der Vorderansicht.

In einem Pumpentopf 15 einer Haushalt-Geschirrspülmaschine ist eine Verteilerkammer 1 eines thermoelektrischen Mehrfachventils begrenzt durch ein Gehäuse 13 und einen Deckel 9 angeordnet. Über die Zuführung 2 wird der von einer Pumpe oder dgl. geförderte Medienstrom in die Verteilerkammer 1 geleitet und dort entsprechend den Programmgegebenheiten der Haushalt-Geschirrspülmaschine entweder in 2 Teilströme zerlegt und in die entsprechenden Auslaßöffnungen 3, 4 geleitet oder vollständig in eine der Auslaßöffnungen 3, 4 geleitet oder bei Verschließen beider Ausläßöffnungen 3, 4 in der Ventilkammer 1 gestoppt. Die Auslaßöffnung 3 führt zu einem nicht dargestellten oberen Sprüharm und die Auslaßöffnung 4 zum unteren Sprüharm der Haushalt-Geschirrspülmaschine. Zum Absperren und Öffnen der Abflußöffnungen 3, 4 sind zwei Ventilstößel 5, 6 vorgesehen, deren Öffnungs- bzw. Schließbewegungen von Aktuatoren 7 über ihre herausragenden Aktuatorköpfe 11 erzeugt wird. Der Antrieb der Ventilstößel 5, 6 kann aber auch über Elektromagnete, Getriebemotoren oder ähnliche Antriebselemente bewirkt werden. Die Aktuatoren 7 sind über eine Rastverbindung 8 mit dem Deckel 9 verbunden. In eine Membran 10 sind die Aktuatorköpfe 11 die Ventilstößel 5, 6 und der Deckel 9 eingeknöpft. Die Aktuatorköpfe 11 sind auf der der Einknöpfstelle der Ventilstößel 5, 6 gegenüberliegenden Seite der Membrane 10 eingeknöpft. Die Ventilstößel 5, 6 werden über drei sternförmig angeordnete Gehäuserippen 12 geführt. Die Ventilstößel 5, 6 sind in Strömungsrichtung kegelig angeformt. Der vordere Kegel bildet den Ventilkörper. Wenn eine Absperrung einer Auslaßöffnung 3 bzw. 4 erfolgen soll, wird der entsprechende Ventilstößel 5 bzw. 6 durch den zugeordneten Aktuator 7 gegen die Dichtkante des Gehäuses 13 gefahren. Damit die Dichtkanten immer mit einer konstanten und gleichbleibenden Dichtkraft gegeneinander gepreßt werden, ist die Membrane in dem Bereich, in dem die Ventilstößel 5, 6 und die Aktuatorköpfe 11 eingeknöpft sind, alsintegrierte Feder ausgebildet.

Das Gehäuse 13 wird mit dem Deckel 9, in einem Gummischuh 14 der Membran verrastet. Das als komplette Montageeinheit vormontierbare Mehrfachventil wird mit dem als Trägereinheit ausgebildeten Pumpentopf 15 über Schnappverbindungen 16 verbunden. Auch hier gleicht die Membran durch ihre Federeigenschaften Fertigungstoleranzen aus.

Wenn nur ein Durchflußquerschnitt abgesperrt werden soll, besteht die Möglichkeit, die überflüssige Absperreinrichtung wegzulassen. Dies erspart einen Ventilstößel und sein Antriebselement und somit Material- und Herstellkosten.

Um bei anliegendem Staudruck den Ventilstößel 5, 6 öffnen zu können, ist die Membrane 10 am Aktuatorkopf 11 abgestützt und gibt so den anliegenden Staudruck auf dem Aktuator 2 weiter und damit auch auf den Ventilstößel 5, 6. Darum wird der Staudruck des Mediums, der auf den Ventilstößel 5, 6 wirkt, ausgeglichen. Somit kann das Mehrfachventil während der Durchströmzeit in beliebigen Intervallen geöffnet bzw. geschlossen werden.

## Patentansprüche

1. Thermoelektrisches Mehrfachventil mit einer mit einem Zufluß (2) und mehreren Auslaßöffnungen (3,4) versehenen Ventilkammer (1), in der von Aktuatoren (7) über deren herausragende Aktuatorköpfe (11) gesteuerte Ventilkörper angeordnet sind, wobei in der Ventilkammer (1) für jede Auslaßöffnung (3, 4) ein Ventilstößel (5, 6) mit Ventilkörper angeordnet ist, dessen Öffnungs- bzw. Schließbewegung von einem jeweils zugeordneten Aktuator (7) gesteuert ist.

2. Mehrfachventil nach Anspruch 1, dadurch gekennzeichnet, daß die Aktuatoren (7) über eine Rastverbindung (8) mit dem Deckel (9) der Ventilkammer (1) verbunden sind.

3. Mehrfachventil nach Anspruch 2, dadurch gekennzeichnet, daß eine Membrane (10) vorgesehen ist, in die Aktuatorköpfe (11), die Ventilstößel (5, 6) und der Deckel (9) eingeknöpft ist.

4. Mehrfachventil nach Anspruch 3, dadurch gekennzeichnet, daß die Aktuatorköpfe (11) auf der der Einknöpfstelle der Ventilstößel (5, 6) gegenüberliegenden Seite der Membrane (10) eingeknöpft sind.

5. Mehrfachventil nach Anspruch 3, dadurch gekennzeichnet, daß die in die Membran (10) eingeknöpften Ventilstößel (5, 6) über drei oder mehrere sternförmig angeordnete Gehäuserippen (12) geführt sind.

6. Mehrfachventil nach Anspruch 5, dadurch gekennzeichnet, daß die Membrane (10) in dem Bereich, in dem die Ventilstößel (5, 6) und die Aktuatorköpfe (11) eingeknöpft sind, als integrierte Feder ausgebildet ist.

7. Mehrfachventil nach Anspruch 3, dadurch gekennzeichnet, daß das Gehäuse (13) der Ventilkammer (1) mit dem Deckel (9), der mit der Membrane (10) verknüpft ist, in einem Gummischuh (14) der Membrane verrastet ist.

8. Mehrfachventil nach Anspruch 1, dadurch gekennzeichnet, daß das Ventil als komplette Montageeinheit vormontierbar ist und mit der Trägereinheit, z.B. dem Pumpentopf (15) einer Haushalt-Geschirrspülmaschine, über Schnappverbindungen (16) verbunden ist.

9. Mehrfachventil nach Anspruch 1, dadurch gekennzeichnet, daß die Ventilstößel (5, 6) in Strömungsrichtung kegelig geformt sind und diese Kegel die Ventilkörper bilden.

## Claims

1. Thermoelectric multi-way valve with a ventilating chamber (1) which is provided with a feed (2) and several outlet openings (3, 4) and in which are arranged valve bodies controlled by actuators (7) by way of projecting actuator heads (11) thereof, wherein a valve plunger (5, 6) with a valve body, the opening and closing movement of which is controlled by a respectively associated actuator (7), is arranged in the valve chamber (1) for each outlet opening (3, 4).

2. Multi-way valve according to claim 1, characterised thereby that the actuators (7) are connected by way of a detent connection (8) with the cover (9) of the valve chamber (1).

3. Multi-way valve according to claim 2, characterised thereby that a diaphragm (10) is provided, in which the actuator heads (11), the valve plunger (5, 6) and the cover (9) are studded in.

4. Multi-way valve according to claim 3, characterised thereby that the actuation heads (11) are studded in on the side of the diaphragm (10) opposite to the studding in position of the valve plunger (5, 6).

5. Multi-way valve according to claim 3, characterised thereby that the valve plungers (5, 6) studded into the diaphragm (10) are guided by way of three or more housing ribs (12) arranged in star shape.

6. Multi-way valve according to claim 5, characterised thereby that the diaphragm (10) is constructed as integrated spring in the region in which the valve plungers (5, 6) and the actuator heads (11) are studded in.

7. Multi-way valve according to claim 3, characterised thereby that the housing (13) of the valve chamber (1) is detented with the cover (9), which is coupled with the diaphragm (10), in a rubberboot (14) of the diaphragm.

8. Multi-way valve according to claim 1, characterised thereby that the valve can be pre-assembled as complete subassembly and is connected with the carrier unit, for example the pump pot (15) of a household dishwashing machine, by way of snap connections (16).

9. Multi-way valve according to claim 1, characterised thereby that the valve plungers (5, 6) are conical in flow direction and these cones form the valve bodies.

## Revendications

1. Valve thermo-électrique à plusieurs voies comportant une chambre de valve (1) avec une entrée (2) et plusieurs sorties (3, 4), à l'intérieur de laquelle sont disposés des obturateurs commandés par des actionneurs (7) par l'intermédiaire de têtes d'actionneurs (11), valve dans la chambre (1) de laquelle il est prévu pour chaque sortie (3, 4) une tige d'obturateur (5, 6) pourvue d'un obturateur dont le déplacement d'ouverture ou de fermeture est commandé chaque fois par un actionneur (7) associé.

2. Valve à plusieurs voies selon la revendication 1, caractérisée par le fait que les actionneurs (7) sont liés au couvercle (9) de la chambre de valve (1) par un moyen de liaison à encliquetage (8).

3. Valve à plusieurs voies selon la revendication 2, caractérisée par le fait qu'il est prévu une membrane (10) dans laquelle les têtes d'actionneurs (11), les tiges d'obturateurs (5, 6) et le couvercle (9) sont implantés par serrage.

4. Valve à plusieurs voies selon la revendication 3, caractérisée par le fait que les têtes d'actionneurs (11) sont implantées dans la membrane (10) du côté opposé au point d'implantation des tiges d'obturateurs (5, 6).

5. Valve à plusieurs voies selon la revendication 3, caractérisée par le fait que les tiges d'actionneurs (5, 6) implantées par serrage dans la membrane (10) sont guidées par trois nervures (12) ou plus du corps disposées en étoile.

6. Valve à plusieurs voies selon la revendication 5, caractérisée par le fait que, dans la région dans laquelle sont implantées les tiges d'obturateurs (5, 6) et les têtes d'actionneurs (11), la membrane (10) est agencée sous forme de ressort intégré.

7. Valve à plusieurs voies selon la revendication 3, caractérisée par le fait que le corps (13) de la chambre de valve (1) avec le couvercle (9) lié à la membrane (10) est engagé par encliquetage dans un sabot (14) en caoutchouc de la membrane.

8. Valve à plusieurs voies selon la revendication 1, caractérisée par le fait que la valve peut être pré-assemblée en tant qu'unité de montage complète et liée par un moyen de liaison à encliquetage (16) à l'ensemble support, par exemple au carter de pompe (15) d'un lave-vaisselle ménager.

9. Valve à plusieurs voies selon la revendication 1, caractérisée par le fait que les tiges d'obturateurs (5, 6) sont coniques dans la direction d'écoulement et que les cônes constituent l'obturateur.
